(19) Europäisches Patentamt
European Patent Office
Office européen des brevets

(11) **EP 4 414 433 A1**

(12) **EUROPÄISCHE PATENTANMELDUNG**

(43) Veröffentlichungstag:
**14.08.2024 Patentblatt 2024/33**

(21) Anmeldenummer: **23155855.2**

(22) Anmeldetag: **09.02.2023**

(51) Internationale Patentklassifikation (IPC):
**C09D 175/04** (2006.01)     **C09J 175/04** (2006.01)
**C08G 71/04** (2006.01)

(52) Gemeinsame Patentklassifikation (CPC):
**C09D 175/04; C08G 71/04; C09J 175/04;**
C08G 2110/00

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **nolax AG**
**6203 Sempach Station (CH)**

(72) Erfinder:
• **LUTZ, Vincent**
  **6462 Seedorf (CH)**
• **ODERMATT-BAER, Daniela**
  **6208 Oberkirch (CH)**

(74) Vertreter: **Hepp Wenger Ryffel AG**
**Friedtalweg 5**
**9500 Wil (CH)**

(54) **VERFAHREN ZUR HERSTELLUNG EINES HYBRIDEN NICHT-ISOCYANATHALTIGEN POLYURETHANS**

(57)   Die vorliegende Erfindung betrifft Verfahren zur Herstellung eines hybriden nicht-isocyanathaltigen Polyurethans. Abgesehen davon betrifft sie Kits-of-Parts zur Herstellung eines hybriden nicht-isocyanathaltigen Polyurethans. Ferner betrifft sie hybride nicht-isocyanathaltige Polyurethane erhältlich durch eines der erfindungsgemässen Verfahren. Ausserdem betrifft sie die Verwendung von hybriden nicht-isocyanathaltigen Polyurethanen zur Herstellung eines Schaums, eines Bindemittels, eines Klebstoffs oder einer Beschichtung.

EP 4 414 433 A1

**Beschreibung**

Die vorliegende Erfindung betrifft Verfahren zur Herstellung eines hybriden nicht-isocyanathaltigen Polyurethans. Abgesehen davon betrifft sie Kits-of-Parts zur Herstellung eines hybriden nicht-isocyanathaltigen Polyurethans. Ferner betrifft sie hybride nicht-isocyanathaltige Polyurethane erhältlich durch eines der erfindungsgemässen Verfahren. Ausserdem betrifft sie die Verwendung von hybriden nicht-isocyanathaltigen Polyurethanen zur Herstellung eines Schaums, eines Bindemittels, eines Klebstoffs oder einer Beschichtung.

Polyurethan bezeichnet eine Klasse von Polymeren, die aus organischen Einheiten bestehen, die durch Carbamat-Verbindungen (oder Urethan-Verbindungen) verbunden sind. Im Gegensatz zu anderen gängigen Polymeren wird Polyurethan aus einer breiten Palette von Ausgangsstoffen hergestellt. Durch diese chemische Vielfalt entstehen Polyurethane mit unterschiedlichen chemischen Strukturen, die zu vielen verschiedenen Anwendungen führen. Dazu gehören Hart- und Weichschaumstoffe, Lacke und Beschichtungen, Klebstoffe, elektrische Vergussmassen und Fasern wie Elasthan und Polyurethan-Laminat.

Polyurethane sind alternierende Copolymere und werden häufig durch Reaktion eines Isocyanats mit einem Polyol hergestellt. Sowohl die Isocyanate als auch die Polyole, die zur Herstellung eines Polyurethans verwendet werden, enthalten zwei oder mehr funktionelle Gruppen pro Molekül.

Isocyanate zählen zu den Stoffen mit atemwegssensibilisierenden Eigenschaften und ihre Herstellung umfasst in der Regel die Verwendung von Phosgen. Sie sind deshalb beispielsweise innerhalb der Europäischen Union (EU) bestimmten Beschränkungen unterstellt. Das macht die Verwendung von Isocyanaten für die Herstellung von Polyurethanen weniger attraktiv. Unter anderem aus diesem Grund entstand der Bedarf nach so genannten nicht-isocyanathaltigen Polyurethanen (englisch: non-isocyanate polyurethanes, NIPUs).

Es gibt im Stand der Technik verschiedene Arten, um NIPUs herzustellen. Die vier häufigsten Syntheseansätze sind die Polyaddition von cyclischen Carbonaten und polyfunktionellen Aminen; die Polykondensation zwischen einem Polycarbamat und einem Polyol oder einem Polyamin; die ringöffnende Polymerisation von 6- oder 7-gliedrigen cyclischen Carbamaten; und Umlagerungsreaktionen, beispielsweise Curtius-, Hofmann- oder Lossen-Umlagerungen.

Die Polyaddition von cyclischen Carbonaten und polyfunktionellen Aminen scheint einer der vielversprechendsten Wege zu sein, um NIPUs herzustellen. Solche Polyurethane liegen in der Form von Polyhydroxy-Polyurethanen (PHUs) vor, wobei neben Urethanbindungen auch primäre und sekundäre Alkohol-Gruppen gebildet werden. NIPUs unterscheiden sich also chemisch von Polyurethanen, die mit Isocyanaten hergestellt werden (STACHAK, P. et al. Recent Advances in Fabrication of NIPU-based Composite Materials. Materials 2021, Vol. 14, Seite 3497).

NIPUs können durch Copolymerisation modifiziert werden oder als Matrizen für die Herstellung von Polymerverbundwerkstoffen mit verschiedenen Additiven verwendet werden, ähnlich wie ihre konventionellen Gegenstücke. Beispielsweise können durch Kombination von cyclischen Carbonaten, polyfunktionellen Aminen und Epoxiden hybride NIPUs (H-NIPUs) hergestellt werden.

H-NIPUs werden im Stand der Technik häufig in mehrschrittigen Synthesen hergestellt, indem beispielsweise in einem ersten Syntheseschritt ein cyclisches Carbonat mit einem multifunktionellen Amin zu einem Präpolymer umgesetzt wird und das/die Zwischenprodukt(e) aufgearbeitet und/oder isoliert wird/werden. Das Präpolymer wird dann in einem zweiten Syntheseschritt mit einem Polyepoxid zu einem H-NIPU umgesetzt. Das zuerst hergestellte Präpolymer kann beispielsweise auch Epoxide und cyclische Carbonate beinhalten und in einem weiteren Schritt mit einem Polyamin umgesetzt werden. So können Reagenzien und Nebenprodukte des ersten Syntheseschritts den zweiten Syntheseschritt nicht negativ beeinflussen (CORNILLE, A. et al. A perspective approach to sustainable routes for non-isocyanate polyurethanes. Eur. Polym. J. 2017, Vol. 87, Seiten 535 bis 552).

Ein solches Präpolymer umfassend cyclische Carbonate und Epoxide wird in US 9102829 B2 (NANOTECH IND INC, 11. August 2015) beschrieben. Dieses wird hergestellt, indem epoxidierte ungesättigte Fettsäuretriglyceride bei 100 °C bis 140 °C mit $CO_2$ umgesetzt werden, um carbonisierte-epoxidierte ungesättigte Fettsäuretriglyceride zu erhalten. Die Epoxide der Fettsäuretriglyceride werden also teilweise in ein cyclisches Carbonat umgesetzt, um das Präpolymer zu erhalten. Das Präpolymer wird darauf in mehreren Schritten mit verschiedenen Verbindungen umgesetzt, die jeweils entweder eine oder mehrere Amingruppen enthalten oder Epoxidgruppen enthalten, um die gewünschte Vernetzung des H-NIPU zu erhalten. Die Polymerisation findet dabei bei Raumtemperatur statt. Ein Nachteil dieses Verfahrens ist, dass das Verhältnis zwischen Epoxid- und Carbonatgruppen im Präpolymer von der Steuerbarkeit der Carbonatisierungsreaktion abhängt. Ein weiterer Nachteil dieses Verfahrens ist, dass zur Umsetzung des Präpolymers zum H-NIPU mehrere Verfahrensschritte mit anschliessender Aufarbeitung und/oder Isolierung notwendig sind, in denen verschiedene Verbindungen mit dem Produkt des jeweiligen vorangehenden Schritts umgesetzt werden.

Eine weitere Herstellung eines H-NIPU in mehreren Verfahrensschritten wird in US 7989553 B2 (NANOTECH IND INC, 02. August 2011) beschrieben. In einem ersten Verfahrensschritt wird ein so genannter Modifikator hergestellt, der aus einem linearen PHU besteht, welches aus der Reaktion zwischen einem primären Amin und cyclischem Carbonat entsteht. Dieser Modifikator wird dann in einem weiteren Verfahrensschritt mit einer Epoxid-Komponente und einer Amin-Komponente gemischt. Die Mischung wird während 30 min bei 50 °C gerührt und danach in eine Form gegossen, wo sie bei 15 °C bis 30 °C während 7 Tagen gelagert werden zur Polymerisation. Auch hier ist nachteilig, dass für die Herstellung des gewünschten H-NIPU mehrere Verfahrensschritte notwendig sind.

Ebenso beschreibt US 2021032495 A1 (ZHOU, Q., 04. Februar 2021) ein mehrschrittiges Verfahren, wobei zuerst ein Amin-terminiertes NIPU-Vorpolymer aus Aminen und cyclischen Carbonaten bei 100 °C hergestellt wird. Ausserdem wird ein Epoxid-Kettenverlängerer aus Trimethylolpropan-Triglycidylether und einem Amin hergestellt. Das Vorpolymer wird weiter mit dem Epoxid-Kettenverlängerer zu einem H-NIPU umgesetzt.

Im Stand der Technik werden auch Verfahren beschrieben, bei denen alle Komponenten in einem Verfahrensschritt gemischt werden, ohne vorab ein Präpolymer herzustellen. In einem solchen Fall ist von einer Eintopf-Synthese die Rede.

Die Herstellung eines H-NIPU in einer solchen Eintopf-Synthese wird von KE, J. et al. (Critical transition of epoxy resin from brittleness to toughness by incorporating CO2-sourced cyclic carbonate. J. CO2 Util. 2018, Vol. 26, Seiten 302 bis 313) beschrieben. Dabei wird eine Epoxid-haltige Verbindung mit einer Verbindung, die cyclische Carbonatgruppen enthält, und einem Organokatalysator gemischt. Die resultierende Mischung wird bei 75 °C für 20 min entgast und zur entgasten Mischung wird eine Amin-haltige Verbindung gegeben. Die Mischung wird in eine Form gegossen und zuerst bei 25 °C für 24 h, dann bei 100 °C für 2 h und schliesslich bei Raumtemperatur für 7 Tage polymerisiert und ausgehärtet. Nachteilig dabei ist, dass die Mischung trotz Zugabe eines Katalysators für die Polymerisation erwärmt werden muss. Somit ist das Verfahren beispielsweise nicht geeignet, um H-NIPUs herzustellen, die auf Oberflächen aufgetragen oder in Formen vergossen werden, die bei den im Verfahren verwendeten Temperaturen nicht hitzebeständig sind.

Der gleiche Nachteil ergibt sich aus dem von LAMBETH, R. H. et al. (Mechanical and adhesive properties of hybrid epoxy-PHU network polymers. Polymer 2019, Vol. 183, Seite 121881) beschriebenen Verfahren für eine Eintopf-Synthese eines H-NIPU. Ein Epoxid, ein cyclisches Carbonat und ein Amin werden gemischt. Die Mischung wird in eine Form gegossen und bei 80 °C während 48 h ausgehärtet. Somit kann auch dieses Verfahren nicht angewendet werden, wenn die Mischung in Berührung mit einem Material ausgehärtet wird, das nicht bei den entsprechenden Temperaturen hitzebeständig ist.

Es ist somit die Aufgabe der Erfindung, die Nachteile des Stands der Technik zu überwinden und ein verbessertes Verfahren zur Herstellung von H-NIPUs zu finden. Das heisst, es ist insbesondere zu ermöglichen, dass H-NIPUs in einer Eintopfsynthese hergestellt werden können und dass die Polymerisationsreaktion bei Raumtemperatur stattfindet.

Diese Aufgabe wird durch die Gegenstände der unabhängigen Ansprüche gelöst. Die erfindungsgemässen Verfahren eignen sich dazu, H-NIPUs herzustellen, ohne dass es zu den genannten Nachteilen des Stands der Technik kommt.

Eines der Verfahren zur Herstellung eines erfindungsgemässen H-NIPU ist dadurch gekennzeichnet, dass es die folgenden Schritte umfasst:

> i. Das Herstellen eines Gemisches umfassend wenigstens ein Epoxid, wenigstens ein cyclisches Carbonat und wenigstens einen Katalysator für die Katalyse der C-N Bindungsbildung unter Beteiligung des wenigstens einen cyclischen Carbonats;
> ii. optional: das Erhitzen des Gemisches, um den Katalysator in Lösung zu bringen; und
> iii. das Hinzugeben wenigstens eines Amins, um ein hybrides nicht-isocyanathaltiges Polyurethan durch Reaktion des Gemisches bei Raumtemperatur zu erhalten.

Das wenigstens eine Epoxid, das wenigstens eine cyclische Carbonat und das wenigstens eine Amin sind vorzugsweise multifunktionell. Die Verwendung von multifunktionellen Verbindungen ermöglicht eine Vernetzung. Monofunktionelle Epoxide, cyclische Carbonate und Amine können teilweise enthalten sein.

Die erfindungsgemässen Verfahrensschritte können in wenigstens einem für den Fachmann geeigneten Reaktionsgefäss durchgeführt werden, welches thermisch und chemisch ausreichend resistent ist. Es kann, muss aber nicht, ein für chemische Synthesen vorgesehenes Reaktionsgefäss sein.

Mit einem Epoxid ist eine Verbindung gemeint, die mindestens ein Epoxid als funktionelle Gruppe enthält. Mit einem Gemisch umfassend wenigstens ein Epoxid ist gemeint, dass das Gemisch eine oder mehrere Verbindungen umfasst, welche jeweils mindestens ein Epoxid als funktionelle Gruppe enthält.

Als Katalysator wird mindestens eine bei Raumtemperatur in fester oder flüssiger Form vorliegende Verbindung verwendet, die geeignet ist, die C-N Bindungsbildung zwischen dem wenigstens einen cyclischen Carbonat und dem wenigstens einen Amin zu katalysieren, welche zur Bildung einer Urethan-Gruppe führt. Dabei werden vorzugsweise Katalysatoren oder Organokatalysatoren verwendet, die zwar sterisch so gehindert sind, dass sie selbst nicht mit einem der zur Herstellung des H-NIPU verwendeten Komponenten eine permanente kovalente Bindung eingehen und somit Teil des Polymers werden; aber so wenig sterisch gehindert wie nötig, damit die Polymerisationsreaktion noch immer bei Raumtemperatur katalysiert wird.

Organokatalysatoren sind organische Moleküle, die chemische Reaktionen in Abwesenheit von Metallen oder Metallionen katalysieren können.

Falls der verwendete Katalysator ein Feststoff ist, kann die Mischung in Schritt ii. optional erhitzt werden, bis der Katalysator gelöst ist. Nach dem Abkühlen auf Raumtemperatur verbleibt zumindest ein Grossteil des Katalysators in Lösung des erfindungsgemässen Gemisches.

Mit einem cyclischen Carbonat ist eine Verbindung gemeint, die mindestens ein cyclisches Carbonat als funktionelle Gruppe enthält. Mit einem Gemisch umfassend wenigstens cyclisches Carbonat ist gemeint, dass das Gemisch eine oder mehrere Verbindungen umfasst, welche jeweils mindestens ein cyclisches Carbonat als funktionelle Gruppe enthält.

Mit einem Amin ist eine Verbindung gemeint, die mindestens ein Amin als funktionelle Gruppe enthält. Mit «wenigstens ein Amin» ist gemeint, dass wenigstens eine Verbindung hinzugegeben wird, welche jeweils mindestens ein Amin als funktionelle Gruppe enthält.

Als Raumtemperatur wird im Rahmen der vorliegenden Erfindung die Temperatur bezeichnet, die üblicherweise in bewohnten Räumen und in Arbeitsräumen wie zum Beispiel Laboratorien herrscht. Üblicherweise liegt diese Temperatur im Bereich zwischen 17 °C und 23 °C, wobei der Bereich unter gewissen Umständen unter- oder überschritten werden kann (z.B. durch Lüften eines Raumes oder durch direkte Sonneneinstrahlung in einen Raum). Im Rahmen der vorliegenden Erfindung wird unter Raumtemperatur eine Temperatur verstanden, die nicht höher ist als 35 °C, vorzugsweise nicht höher als 30 °C, am meisten bevorzugt nicht höher als 25 °C. Ein Verfahrensschritt, der bei Raumtemperatur durchgeführt wird, ist insbesondere ein Schritt, bei dem den physischen Bestandteilen des Schritts keine externe Wärme mittels einer speziell dafür vorgesehenen Wärmequelle zugeführt wird.

Im Rahmen der vorliegenden Erfindung ist der Begriff «oder» in der Formulierung "und/oder" als eine ausschliessende Disjunktion zu verstehen. «A oder B» sagt aus, dass genau eine der beiden Aussagen wahr ist (wenn die Disjunktion wahr ist).

Nach Zugabe des wenigstens einen Amins in Schritt iii. kommt es zu einer Polymerisationsreaktion zwischen dem wenigstens einen cyclischen Carbonat, dem wenigstens einen Epoxid und dem wenigstens einen Amin, wobei der Katalysator die Polymerisationsreaktion beschleunigt. Die Polymerisationsreaktion umfasst die Reaktion zwischen dem wenigstens einen cyclischen Carbonat und dem wenigstens einen Amin, wobei unter C-N Bindungsbildung ein Urethan als funktionelle Gruppe entsteht; weiter umfasst die Polymerisationsreaktion die C-N Bildungsbindung zwischen dem wenigstens einen Amin und dem wenigstens einen Epoxid. Die Verwendung von multifunktionellen Verbindungen (> 2 reaktive funktionelle Gruppen in mindestens einer Komponente) als Ausgangsmonomere ermöglicht die Vernetzung der entstehenden linearen H-NIPUs.

Es hat sich überraschend gezeigt, dass ein mit den beschriebenen Schritten durchgeführtes Verfahren zur Herstellung eines H-NIPU in einer Eintopfsynthese durchgeführt werden kann, wobei insbesondere Schritt iii., in dem die Aushärtung des H-NIPU mittels Polymerisation und Vernetzung der zugegebenen Komponenten stattfindet, bei Raumtemperatur ohne externe Wärmezufuhr durchgeführt werden kann.

Unter einer Eintopfsynthese versteht der Fachmann eine chemische Synthese, die dadurch gekennzeichnet ist, dass man möglichst alle benötigten Reagenzien in einem Gefäss oder auf einer Oberfläche mischt und dann reagieren lässt. Eintopfsynthesen erfordern insbesondere keine Isolierung von Zwischenprodukten.

Einige Verfahren zur Herstellung von H-NIPUs aus dem Stand der Technik umfassen Verfahrensschritte, bei denen beispielsweise ein Präpolymer hergestellt wird, welches aufgearbeitet und isoliert wird, um Nebenprodukte und/oder Reagenzien vom Präpolymer zu trennen, bevor das Präpolymer mit wenigstens einer weiteren Komponente gemischt und zur Reaktion gebracht wird. Es handelt sich also nicht um Eintopfsynthesen. Im Gegensatz dazu ermöglicht das Verfahren der vorliegenden Erfindung die Herstellung eines H-NIPU, ohne dass beispielsweise ein Präpolymer hergestellt und aufgearbeitet werden muss. Denn es hat sich überraschend gezeigt, dass im Verfahren der vorliegenden Erfindung beispielsweise die Reaktion zwischen dem Amin und dem Epoxid nicht wesentlich durch andere Komponenten im Gemisch gehindert wird, wenn alle Komponenten zusammen vorliegen. Ebenso wenig werden unerwünschte Nebenreaktionen beobachtet, die die aus dem Verfahren resultierenden H-NIPUs beeinträchtigen. Ein solches Verfahren ist zeit- und energiesparend im Gegensatz zu Verfahren umfassend Nicht-Eintopfsynthesen. Ausserdem werden wertvolle Ressourcen gespart, wenn weniger Arbeitsschritte, Materialien und Chemikalien wie Lösungsmittel benötigt werden.

Andere Verfahren aus dem Stand der Technik (unter anderem solche, die in einer Eintopfsynthese durchgeführt werden können) sind darauf angewiesen, dass zumindest der Polymerisationsschritt (oft auch Aushärtungsschritt genannt) nur unter Zuführung externer Wärme mittels speziell dafür vorgesehener Wärmequelle zu einem H-NIPU mit den gewünschten thermischen, mechanischen und chemischen Eigenschaften führt. Es hat sich jedoch überraschend gezeigt, dass Eintopfsynthesen von H-NIPUs auch ohne Wärmezufuhr, bei Raumtemperatur möglich sind. Die nach dem Verfahren der vorliegenden Erfindung hergestellten H-NIPUs besitzen beispielsweise ausreichend gute mechanische Eigenschaften, um sie beispielsweise als Klebstoff für tragende Bauteile einzusetzen, obwohl der Polymerisationsschritt (Schritt iii.) bei Raumtemperatur durchgeführt wird. Die Eigenschaften von beispielhaften H-NIPUs sind in den Ausführungsbeispielen aufgeführt. Dass sich das Verfahren und insbesondere der Polymerisationsschritt (Schritt iii.) bei Raumtemperatur durchführen lässt, hat den Vorteil, dass Verfahren erstens energiesparender ist im Vergleich zu Verfahren, bei denen teils während mehrerer Stunden oder Tagen Wärme zugeführt werden muss beim Polymerisationsschritt. Zweitens eignet sich die Verwendung von nach dem Verfahren der vorliegenden Erfindung hergestellten H-NIPUs auch in physischem Kontakt mit Materialien, die nicht sehr temperaturbeständig sind. Wird das Gemisch vor dem Polymerisationsschritt (Schritt iii.) beispielsweise in eine Form gegossen oder wird eine Oberfläche mit dem Gemisch beschichtet zum Verkleben (wie H-NIPUs üblicherweise verwendet werden), spielt es beim Verfahren der vorliegenden Erfindung keine Rolle, ob die Form oder die Oberfläche beispielsweise nur eine Temperaturbeständigkeit bis zu einer bestimmten Temperatur über der Raumtemperatur hat, da der Polymerisationsschritt (Schritt iii.) der vorliegenden Erfindung keine externe Wärmezufuhr verlangt.

Ohne an eine Theorie gebunden zu sein, wird davon ausgegangen, dass (wie oben beschrieben) insbesondere Katalysatoren für das Verfahren der vorliegenden Erfindung geeignet sind, welche zwar so sterisch gehindert sind, dass sie nicht selbst Teil des Polymers werden, aber dennoch so wenig sterisch gehindert wie nötig, damit die Polymerisationsreaktion noch immer bei Raumtemperatur katalysiert wird. Insbesondere eignen sich tertiäre Amine als Organokatalysatoren, da sie nicht selbst Teil des Polymers werden während der Polymerisation wie beispielsweise primäre und teilweise auch sekundäre Amine. Dennoch sind tertiäre Amine im Vergleich zu anderen Organokatalysatoren noch immer ausreichend reaktiv, um die Polymerisationsreaktion bei Raumtemperatur zu katalysieren.

Zudem eignen sich überraschenderweise insbesondere Organokatalysatoren, welche in der Lage sind, die Carbonyl-Gruppe von cyclischen Carbonaten zu aktivieren. Zu diesen Organokatalysatoren gehören beispielsweise Wasserstoffbrückendonoren wie Thioharnstoff und 1,5,7-Triazabicyclo[4.4.0]dec-5-ene (TBD), welches wegen der hohen Basizität unter neutralen Bedingungen in protonierter Form vorliegt.

Die Verwendung eines erfindungsgemässen Katalysators verhindert überraschenderweise die Bildung unerwünschter, durch erhöhte Temperaturen verursachte Nebenprodukte. Zu diesen Nebenprodukten zählen Oxazolidinone und Harnstoffe, welche durch die Reaktion zwischen den gebildeten Alkoholgruppen des H-NIPU und den Zwischenprodukten der Eintopfsynthese bei erhöhten Temperaturen entstehen können. Solche Zwischenprodukte sind insbesondere deswegen unerwünscht, weil durch ihre Bildung die Polymerisation abgebrochen wird. Das führt zu unzureichender Polymerisierung und unzureichender Vernetzung.

Ein zusätzlicher Vorteil, der sich aus dem erfindungsgemässen Verfahren ergibt, ist, dass der Gehalt vom wenigstens einen cyclischen Carbonat im Verhältnis zum wenigstens einen Epoxid in einem sehr weiten Bereich variiert werden kann. Das Verhältnis zwischen dem wenigstens einen cyclischen Carbonat und dem wenigstens einen Epoxid kann in Bezug auf die vorliegende Anzahl funktioneller Gruppen zwischen 5:95 und 95:5 liegen, ohne dass die Vernetzung des resultierenden H-NIPU beeinträchtigt wird. Die mechanischen, thermischen und chemischen Eigenschaften können daher durch die Wahl eines geeigneten Verhältnisses zwischen cyclischem Carbonat und Epoxid je nach Verwendungszweck eingestellt werden. Für strukturelle Anwendungen (z.B. bei Anwendung eines H-NIPU als Klebstoff für die Verklebung von tragenden Konstruktionen) eignet sich vorzugsweise ein Verhältnis von zwischen 40:60 und 60:40, noch mehr bevorzugt ein Verhältnis von zwischen 45:55 und 55:45, am meisten bevorzugt ein Verhältnis von 50:50.

Somit ermöglichen die Gegenstände der Erfindung ein verbessertes Verfahren zur Herstellung von H-NIPUs.

In einer bevorzugten Ausführungsform wird Schritt i. bei Raumtemperatur durchgeführt.

In einer weiteren bevorzugten Ausführungsform wird das Gemisch nach Hinzugeben des mindestens eines Amins und vor Erhalt des hybriden nicht-isocyanathaltigen Polyurethans vergossen oder auf ein Trägermaterial aufgetragen. Das Auftragen kann insbesondere mit den für Polyurethane, Polyharnstoffe oder Epoxy-Klebstoffe üblichen Techniken durchgeführt werden. Möglich sind beispielsweise das Austragen mittels statischer und dynamischer Mischer, (Hochdruck)-Gegenstrommischer, Raupenauftrag, Injektionsverfahren, Verguss, Sprühen, Aufspachteln, Rakeln, Aufrollen, Stempeln, Tauchen, und Imprägnieren.

In einer bevorzugten Ausführungsform wird wenigstens ein Füllstoff hinzugegeben. Der wenigstens eine Füllstoff wird ausgewählt aus der Gruppe der mineralischen, organischen und hybriden Füllstoffe. Die mineralischen Füllstoffe sind vorzugsweise Kreide und/oder Talk, die organischen Füllstoffe sind vorzugsweise Polymere und/oder Naturfasern, die hybriden Füllstoffe sind vorzugsweise «core-shell» Partikel.

Im Sinne der vorliegenden Erfindung ist ein Füllstoff ein Zusatzstoff, der das Volumen eines Stoffgemischs erhöht, ohne die wesentlichen Eigenschaften des Stoffgemischs zu ändern.

In einer weiteren bevorzugten Ausführungsform wird wenigstens ein Farbstoff hinzugegeben.

Im Sinne der vorliegenden Erfindung wird als Farbstoff eine chemische Verbindung bezeichnet, die die Eigenschaft hat, andere Materialien zu färben.

In einer weiteren bevorzugten Ausführungsform wird wenigstens ein Additiv hinzugegeben. Das wenigstens eine Additiv wird ausgewählt aus der Gruppe der Stabilisatoren, Verarbeitungshilfsmittel, Verdicker, Emulgatoren, Schlagzähigkeitsmodifikatoren und Flammschutzmittel.

Im Sinne der vorliegenden Erfindung ist ein Additiv ein Zusatzstoff, der in einem Verfahren zur Herstellung eines Erzeugnisses zugesetzt wird, um bestimmte Eigenschaften zu erreichen oder zu verbessern. Im Sinne der vorliegenden Erfindung werden die verschiedenen Additive folgendermassen definiert: ein Stabilisator wird einer chemischen Verbindung oder einem Gemisch zugesetzt, um deren Beständigkeit zu sichern und deren Zerfall zu verlangsamen; ein Verarbeitungshilfsmittel kann beispielsweise ein Treibmittel sein zur Herstellung eines Schaumstoffs; ein Verdicker ist ein Stoff, der in der Lage ist, Lösungsmittel wie zum Beispiel Wasser zu binden; ein Emulgator dient dazu, zwei nicht miteinander mischbare Flüssigkeiten zu einem fein verteilten Gemisch, der so genannten Emulsion, zu vermengen und zu stabilisieren; ein Schlagzähigkeitsmodifikatoren erhöht die Fähigkeit eines Werkstoffs, Stossenergie und Schlagenergie zu absorbieren, ohne zu brechen; und ein Flammschutzmittel ist ein Stoff, der die Ausbreitung von Bränden einschränkt, verlangsamt oder verhindern soll.

Der wenigstens eine Füllstoff, und/oder der wenigstens eine Farbstoff, und/oder das wenigstens eine Additiv können vor, nach oder während eines beliebigen Schritts des erfindungsgemässen Verfahrens hinzugegeben werden. Selbst während des Polymerisationsschritts (Schritt iii.) ist eine Hinzugabe dieser Stoffe möglich, solange das Gemisch noch umrührbar ist. Die gewünschte Menge des hinzuzugebenden Stoffs kann auf einmal, in Portionen über einen bestimmten Zeitraum oder kontinuierlich über einen bestimmten Zeitraum zugegeben werden.

Es wurde überraschenderweise festgestellt, dass eine Vielzahl an verschiedenen Füllstoffen, Farbstoffen und Additiven während des erfindungsgemässen Verfahrens zum Gemisch gegeben werden können, ohne dass diese die Eintopfsynthese bei Raumtemperatur verunmöglichen und dass das erhaltene H-NIPU trotzdem die gewünschten mechanischen, thermischen und chemischen Eigenschaften hat.

In einer bevorzugten Ausführungsform wird wenigstens ein primäres Amin hinzugegeben. Vorzugsweise ist dieses wenigstens eine primäre Amin wenigstens ein aliphatisches primäres Amin. Am meisten bevorzugt ist ein aliphatisches primäres Amin ausgewählt aus der Gruppe bestehend aus Diethylentriamin, wenigstens ein Amin der Gruppe der Phenalkamine, oder eine Kombination davon. Je höher die Reaktivität des mindestens einen Amins, das in Schritt iii. des erfindungsgemässen Verfahrens hinzugegeben wird, gegenüber cyclischen Carbonaten, desto niedriger ist die benötigte Reaktionstemperatur. Primäre Amine und insbesondere aliphatische primäre Amine weisen eine besonders hohe Reaktivität in diesem Zusammenhang auf.

In einer weiteren bevorzugten Ausführungsform liegt die Summe der Anzahl an funktionellen Gruppen des wenigstens einen cyclischen Carbonats (aus Schritt i. des erfindungsgemässen Verfahrens) und der Anzahl an funktionellen Gruppen des wenigstens einen Epoxids (aus Schritt i. des erfindungsgemässen Verfahrens) in einem Verhältnis von zwischen 0.1:1 und 6:1, bevorzugt zwischen 0.2:1 und 3:1, am meisten bevorzugt zwischen 0.4:1 und 1.5:1 zur Anzahl an funktionellen Gruppen des wenigstens einen primären Amins (aus Schritt iii. des erfindungsgemässen Verfahrens) vor. Dieses Verhältnis, X, kann auch mit der Gleichung

$$X = \frac{C + E}{A} \qquad (1)$$

dargestellt werden, wobei C die Anzahl an funktionellen Gruppen des wenigstens einen cyclischen Carbonats, E die Anzahl an funktionellen Gruppen des wenigstens einen Epoxids und A die Anzahl an funktionellen Gruppen des wenigstens einen primären Amins darstellen.

Es hat sich überraschend gezeigt, dass der im Stand der Technik oft verwendete Aminüberschuss nicht nötig ist, um H-NIPUs in einer Eintopfsynthese herzustellen. Es konnten Formulierungen gefunden werden, mit welchen mit einem annährend stöchiometrischen Verhältnis (ein annäherndes 1:1 Verhältnis X) eine hohe Festigkeit des ausgehärteten H-NIPU von > 5 MPa erreicht werden kann. Eine solche Festigkeit eines H-NIPU Klebstoffs eignet sich beispielsweise für die Verklebung von strukturellen Bauteilen.

Bevorzugt wird wenigstens ein Epoxid ausgewählt aus der Gruppe bestehend aus primären, sekundären und tertiären Epoxiden oder eine Kombination davon hinzugegeben. Noch mehr bevorzugt wird wenigstens ein primäres und/oder ein sekundäres Epoxid hinzugegeben. Am meisten bevorzugt wird wenigstens ein Epoxid ausgewählt aus der Gruppe bestehend aus Epichlorohydrin, di-funktionelles Glycidyl-Ether-Epoxidharz und Trimethylol-Propan-Triglycidyl-Ether. Die Zugabe findet in Schritt i. des erfindungsgemässen Verfahrens statt. Es hat sich gezeigt, dass die Epoxide aus einem breiten Bereich ausgewählt werden können, ohne dass die Herstellung von H-NIPUs gemäss dem Verfahren der vorliegenden Erfindung beeinträchtigt wird.

Weiter bevorzugt wird wenigstens ein aromatisches Epoxid hinzugegeben, wobei das aromatische Epoxid vorzugsweise eine Glasübergangstemperatur, $T_g$, von mindestens 0 °C, vorzugsweise mindestens 40 °C, am meisten bevorzugt mindestens 100 °C hat. Die Zugabe findet in Schritt i. des erfindungsgemässen Verfahrens statt. Die gewünschte Glasübergangstemperatur des Epoxidbestandteils hängt vom Verwendungszweck des jeweiligen H-NIPUs ab. Ohne an eine Theorie gebunden zu sein, haben H-NIPUs, die mit einem Epoxidbestandteil mit einer Glasübergangstemperatur von ungefähr 0 °C hergestellt werden, in der Regel eine ähnliche Festigkeit wie der wiederablösbare Klebstoff von Haftnotizen. H-NIPUs mit einer Glasübergangstemperatur des Epoxidbestandteils von 40 °C, respektive 100 °C haben eine entsprechend höhere Festigkeit. Solche aromatische Epoxide eignen sich beispielsweise für die Herstellung von H-NIPUs mit einer entsprechend hohen Festigkeit.

Die Messung der Glasübergangstemperatur erfolgt nach der Prüfnorm «ASTM D5279» (Stand: 05. August 2021). Die Peak-Position der Kurve des Verlustfaktors tan($\delta$) der dynamisch-mechanischen Analyse (DMA) entspricht der Glasübergangstemperatur.

In einer bevorzugten Ausführungsform wird wenigstens ein cyclisches Carbonat hinzugegeben, das ein Molekulargewicht kleiner als 600 g/mol, noch mehr bevorzugt kleiner als 400 g/mol, am meisten bevorzugt kleiner als 300 g/mol hat. Die Zugabe findet in Schritt i. des erfindungsgemässen Verfahrens statt. Ohne an eine Theorie gebunden zu sein, hat ein möglichst niedriges Molekulargewicht des mindestens einen cyclischen Carbonats einen positiven Einfluss auf die Reaktionsrate und die Umsetzung der H-NIPU Polymerisationsreaktion. Nebst anderen Faktoren ermöglicht dies die Eintopfsynthese bei Raumtemperatur gemäss Verfahren der vorliegenden Erfindung. Besonders gut eignen sich beispielsweise Trimethylpropanol tricyclocarbonat und Polypropylenglycol biscyclocarbonat.

In einer weiteren bevorzugten Ausführungsform ist der Katalysator ein Elektrophil, vorzugsweise ein Wasserstoffbrückenbindungs-Katalysator, noch mehr bevorzugt ein Katalysator ausgewählt aus der Gruppe bestehend aus Thioharnstoff und Salzen von Thioharnstoff. In einer anderen bevorzugten Ausführungsform ist der Katalysator eine basische Stickstoffverbindung, bevorzugt ein sterisch gehindertes Amin, weiter bevorzugt ein tertiäres Amin, wobei das tertiäre Amin vorzugsweise ausgewählt ist aus der Gruppe bestehend aus

- 1,5,7-Triazabicyclo[4.4.0]dec-5-en;
- 7-Methyl-1,5,7-triazabicyclo[4.4.0]dec-5-ene;
- 1,8-Diazabicyclo[5.4.0]undec-7-en;
- 1,5-Diazabicyclo[4.3.0]non-5-ene;
- Triethylamin; und
- ein Polyaminophosphazen, wobei das Polyaminophosphazen vorzugsweise $P_4$-t-Bu ist.

In einer weiteren bevorzugten Ausführungsform ist der Katalysator ein stark basischer, aber schwach nukleophiler Katalysator.

Besonders bevorzugt ist der Katalysator ein sterisch gehindertes Amin.

Ein Wasserstoffbrückenbindungs-Katalysator ist ein Katalysator, welcher sich auf die Nutzung von Wasserstoffbrücken-Wechselwirkungen zur Beschleunigung und Kontrolle chemischer Reaktionen stützt.

Im Rahmen der vorliegenden Erfindung ist ein sterisch gehindertes Amin ein Amin, welches zwar so sterisch gehindert ist, dass es nicht selbst Teil des Polymers wird beim erfindungsgemässen Verfahren zur Herstellung eines H-NIPU, aber dennoch so wenig sterisch gehindert wie nötig, damit die Polymerisationsreaktion noch immer bei Raumtemperatur katalysiert wird. Insbesondere eignen sich tertiäre Amine als Katalysatoren, da sie nicht selbst Teil des Polymers werden während der Polymerisation wie beispielsweise primäre und teilweise auch sekundäre Amine. Dennoch sind tertiäre Amine im Vergleich zu anderen Katalysatoren noch immer ausreichend reaktiv, um die Polymerisationsreaktion bei Raumtemperatur zu katalysieren.

Unter $P_4$-t-Bu versteht der Fachmann eine Kurzform für die Verbindung (1-tert.-Butyl-4,4,4-tris-(dimethylamino)-2,2-bis-[tris-(dimethylamino)-phosphoranylidenamino]-2A5,4A5-catenadi-(phos-phazen).

Ein weiterer Aspekt der Erfindung betrifft ein Kit-of-Parts zur Herstellung eines hybriden nicht-isocyanathaltigen Polyurethans nach einem der erfindungsgemässen Verfahren. Das Kit-of-Parts umfasst eine erste Komponente, welche wenigstens ein Epoxid umfasst, und eine zweite Komponente, welche wenigstens ein Amin umfasst. Die erste Komponente und/oder eine dritte Komponente umfasst wenigstens ein cyclisches Carbonat, und mindestens eine Komponente umfasst wenigstens einen Katalysator für die Katalyse der C-N Bindungsbildung unter Beteiligung des wenigstens einen cyclischen Carbonats.

Ein Kit-of-Parts ist im Rahmen der vorliegenden Erfindung eine bestimmungsgemäss zur gemeinsamen Verwendung hergerichtete Menge von Komponenten, um ein fertiges Produkt herzustellen. Ein Kit-of-Parts enthält in der Regel alle notwendigen Komponenten, die für die Herstellung des Produkts erforderlich sind, und oft auch Anleitungen und Diagramme mit Instruktionen zur gemeinsamen Verwendung. Die einzelnen Komponenten werden dabei beispielsweise in einer gemeinsamen Umverpackung angeboten. Einzelne Komponenten können aber auch separat verpackt und/oder angeboten werden zusammen mit einem Hinweis darauf, dass die entsprechende(n) Komponente(n) mit (einer) anderen Komponente(n) des Kit-of-Parts verwendet werden soll(en). Ein Kit-of-Parts kann mit oder ohne zur Verarbeitung notwendiger Utensilien und Werkzeuge verpackt und/oder angeboten werden. Bei einem Kit-of-Parts zur Herstellung von H-NIPUs kann ein solches Werkzeug beispielsweise ein Rakel sein zum Auftragen des noch flüssigen Gemischs vor dem Aushärten auf eine Oberfläche.

Im Rahmen der vorliegenden Erfindung bedeuten die Begriffe «erste Komponente» und «zweite Komponente» nicht, dass zum Mischen der beiden Komponenten die erste Komponente unbedingt zuerst beispielsweise in einem Mischgefäss vorgelegt und dann die zweite Komponente zugegeben wird. Die zweite Komponente kann genauso gut zuerst vorgelegt werden gefolgt von der Zugabe der ersten Komponente.

Alle in den erfindungsgemässen Verfahren beschriebenen Merkmale gelten auch für das erfindungsgemässe Kit-of-Parts, welches nach einem erfindungsgemässen Verfahren hergestellt wird. Insbesondere wird wie oben beschrieben vorzugsweise wenigstens ein cyclisches Carbonat eingesetzt, das ein Molekulargewicht kleiner als 600 g/mol, noch mehr bevorzugt kleiner als 400 g/mol, am meisten bevorzugt kleiner als 300 g/mol. Ausserdem wird vorzugsweise ein Katalysator wie oben beschrieben eingesetzt, besonders bevorzugt ein sterisch gehindertes Amin.

Im Rahmen der vorliegenden Erfindung bedeutet die Aussage «mindestens eine Komponente umfasst wenigstens einen Katalysator», dass wenigstens ein Katalysator in der ersten Komponente, in der zweiten Komponente, in der allenfalls vorliegenden dritten Komponente, in einer vierten Komponente oder in einer Kombination davon vorliegt.

Ein weiterer Aspekt der vorliegenden Erfindung betrifft ein hybrides nicht-isocyanathaltiges Polyurethan, insbesondere in der Form eines Schaums, eines Bindemittels, eines Klebstoffs oder einer Beschichtung, erhältlich durch ein erfindungsgemässes Verfahren. Die Beschichtung ist dabei vorzugsweise ein Lack, ein Farbmittel oder ein Verputz.

Im Rahmen der vorliegenden Erfindung gelten folgende Definitionen: Ein Schaum ist eine feine oder kolloide Verteilung eines Gases (disperse Phase) in einer Flüssigkeit oder einem Festkörper. Ein Bindemittel ist ein Stoff, durch den Feststoffe mit einem feinen Zerteilungsgrad (z.B. Pulver) miteinander bzw. auf einer Unterlage verklebt werden. Ein Klebstoff ist ein nichtmetallischer Stoff, der in der Lage ist, Werkstoffe durch Oberflächenhaftung und seine innere Festigkeit zu verbinden. Eine Beschichtung wird zum Beschichten verwendet. Beschichten ist das Aufbringen einer fest haftenden Schicht aus formlosem Stoff auf ein Werkstück ohne wesentliche Änderung der Geometrie des Werkstücks. Ein Lack ist ein Beschichtungsstoff, der dünn auf Gegenstände aufgetragen wird und durch chemische und/oder physikalische Vorgänge zu einem im Wesentlichen durchgehenden, festen Film aufgebaut wird. Ein Farbmittel ist eine farbgebende Substanz oder Zusammensetzung. Ein Verputz ist eine feucht zu verarbeitende, pastöse und meist körnige Masse, mit der Außen- und Innenwände, Decken sowie in Ausnahmefällen auch Dächer und dekorative Objekte beschichtet werden.

Es hat sich erwiesen, dass H-NIPUs, welche nach einem erfindungsgemässen Verfahren hergestellt werden, unterschiedliche Eigenschaften zu H-NIPUs des Stands der Technik aufweisen. Insbesondere wurde festgestellt, dass die Vernetzungsreaktion bei Raumtemperatur beim erfindungsgemässen Verfahren trotz der Katalysatoren unvollständig ist. Das bedeutet, dass die H-NIPUs ein Post-Curing-Potential haben. Ein Post-Curing-Potential lässt sich nachweisen, indem die $T_g$ des H-NIPU vor und nach Erwärmen des ausgehärteten H-NIPU ermittelt wird. Beispielsweise wird das H-NIPU von 50 °C auf 180 °C erhitzt mit einer Aufheizrate von 10 °C/min. Erhöht sich die $T_g$ um einige °C, beispielsweise um 10 °C, da sich das Polymer unter diesen Bedingungen noch nachvernetzen kann, kann ein Post-Curing-Potential festgestellt werden. Ohne an eine Theorie gebunden zu sein, wird davon ausgegangen, dass bei H-NIPUs aus dem Stand der Technik die Reaktionsbedingungen (insbesondere die erhöhte Temperatur) so gewählt sind, dass die Vernetzung im Wesentlichen vollständig abläuft und somit kein wesentliches Post-Curing-Potential vorhanden ist. Ein Post-Curing-Potential kann nur existieren, wenn von allen Komponenten Restmonomere vorhanden sind. Dies ist insbesondere bei Verfahren des Stands der Technik nicht der Fall, bei denen wenigstens ein Zwischenprodukt, beispielsweise ein Präpolymer, in einem Zwischenschritt aufgearbeitet und/oder isoliert wird. In einem solchen Fall werden Restpolymere des entsprechenden Reaktionsschritts in der Regel entfernt, was ein Post-Curing-Potential des fertigen H-NIPU verunmöglicht.

Vorzugsweise ist/sind das wenigstens eine Epoxid, das wenigstens eine cyclische Carbonat, das wenigstens eine Amin oder eine Kombination davon (eine) bio-basierte Verbindung(en).

Wie es in der Fachwelt bekannt ist, ist ein bio-basierter Stoff ein Stoff, der auf Basis nachwachsender Rohstoffe erzeugt wird. Ein nachwachsender Rohstoff ist ein organischer Rohstoff, der aus landwirtschaftlicher, forstwirtschaftlicher oder aus der Fischerei-Produktion stammt. Im Rahmen der vorliegenden Erfindung bedeutet «auf Basis nachwachsender Rohstoffe», dass wenigstens ein Vorprodukt des wenigstens einen Epoxids, des wenigstens einen cyclischen Carbonats oder des wenigstens einen Amins, welche(s) zur Herstellung des erfindungsgemässen H-NIPU verwendet wird/werden, ein nachwachsender Rohstoff ist; und das das wenigstens eine Vorprodukt in höchstens einem Reaktionsschritt zum wenigstens einen Epoxid, in höchstens zwei Reaktionsschritten zum wenigstens einen cyclischen Carbonat und in höchstens einem Reaktionsschritt zum wenigstens einen Amin umgesetzt werden kann.

Vorprodukte von bio-basierten Epoxiden sind vorzugsweise oder sind vorzugsweise ein Bestandteil von

- Pflanzenölen, vorzugsweise Sojabohnenöl, Leinöl, Rapsöl, oder eine Kombination davon;
- Saccharide, vorzugsweise Isosorbide, Furane, oder eine Kombination davon;
- Phenole, vorzugsweise Tannine, Cardanol, oder eine Kombination davon;
- Naturharzen, vorzugsweise Terpene, Rosin, Naturkautschuk, oder eine Kombination davon;
- Lignin und/oder Ligninderivate; oder
- eine Kombination davon.

Vorprodukte von bio-basierten cyclischen Carbonaten sind vorzugsweise oder sind vorzugsweise ein Bestandteil von

- Pflanzenölen, vorzugsweise Sojabohnenöl, Leinöl, Rapsöl, oder eine Kombination davon;
- Saccharide, vorzugsweise Furane;
- Phenole, vorzugsweise Tannine und/oder Cardanol;
- Naturharzen, vorzugsweise Terpene und/oder Naturkautschuk;
- Lignin und/oder Ligninderivate; oder
- eine Kombination davon.

Vorprodukte von bio-basierten Aminen sind vorzugsweise oder sind vorzugsweise ein Bestandteil von

- Pflanzenölen, vorzugsweise Aminosäuren, Fettsäuren, Traubenkernöl, oder eine Kombination davon;
- Zuckerderivate, vorzugsweise Isosorbide, Succinsäure, Adipinsäure, Azelainsäure, Glucosederivate, Alkoholderivate, oder eine Kombination davon;
- Phenole, vorzugsweise Cardanol;
- Lignin und/oder Ligninderivate; oder
- eine Kombination davon.

In einer bevorzugten Ausführungsform weist das erfindungsgemässe gehärtete hybride nicht-isocyanathaltige Polyurethan eine Zugfestigkeit von mindestens 10 MPa, vorzugsweise mindestens 25 MPa, am meisten bevorzugt mindestens 40 MPa; eine Bruchdehnung von mindestens 5 %, vorzugsweise mindestens 50 %, am meisten bevorzugt mindestens 100 %; eine Zugscherfestigkeit von mindestens 5 MPa, vorzugsweise mindestens 8 MPa, am meisten bevorzugt mindestens 11 MPa; ein Speichermodul bei 20 °C von mindestens 200 MPa, vorzugsweise mindestens 600 MPa, am meisten bevorzugt mindestens 1000 MPa; oder eine Glasübergangstemperatur, $T_g$, von mindestens 30 °C, vorzugsweise mindestens 40 °C, am meisten bevorzugt mindestens 50 °C auf; oder eine Kombination dieser Eigenschaften.

Die Messung der Zugscherfestigkeit erfolgt nach der Prüfnorm «DIN EN 302-1:2013» (Stand: Juni 2013).

Die Messung der Zug-Dehnungseigenschaften erfolgt nach der Prüfnorm «DIN EN ISO 527-1:2019" (Stand: Dezember 2019).

Die Messung des Speichermoduls und der Glasübergangstemperatur erfolgt nach der Prüfnorm «ASTM D5279» (Stand: 05. August 2021). Die Peak-Position der Kurve des Verlustfaktors tan($\delta$) der dynamisch-mechanischen Analyse (DMA) entspricht der Glasübergangstemperatur.

Die Messung der initialen Viskosität und der Topfzeit erfolgt nach der Prüfnorm «DIN EN ISO 10364" (Stand: Juni 2018).

Die Topfzeit gibt die Zeit vom Anmischen von mehrkomponentigen Materialien bis zu dem Zeitpunkt an, bei dem die Verarbeitung (z.B. das Auftragen oder das Vergiessen) abgeschlossen sein muss.

Ein weiterer Aspekt der Erfindung betrifft die Verwendung eines erfindungsgemässen Kit-of-Parts zur Herstellung eines Schaums, eines Bindemittels, eines Klebstoffs oder einer Beschichtung. Die Beschichtung ist vorzugsweise ein Lack, ein Farbmittel oder ein Verputz.

Das erfindungsgemässe Kit-of-Parts oder das erfindungsgemässe hybride nicht-isocyanathaltige Polyurethan wird vorzugsweise für strukturelle Anwendungen im Automobilbau, im Schiffsbau, im Eisenbahnbau, im Flugzeugbau, im Bau von Transportmitteln, in der Elektronik, im Metallbau, im Maschinenbau, im 3D-Druck, im Holzbau, im Bau von Fassaden, im Dächerbau, im Bodenbau, im Möbelbau, im Messebau, im Bühnenbau, im Türenbau, im Bau von Trennwänden, als Gummi-Ersatz, in der Logistik, im Containerbau, im Tankbau, in der Energiegewinnung, in der Herstellung von Batterien, Farben, Displays, Schuhen, Sportartikeln, Verpackungen, insbesondere Lebensmittelverpackungen, Lacken, Putzen, Klebstoffen oder Matrizen für Composites verwendet.

Ein weiterer Aspekt der vorliegenden Erfindung betrifft die Verwendung

- eines cyclischen Carbonats, vorzugsweise ein cyclisches Carbonat mit einem Molekulargewicht kleiner als 600 g/mol, noch mehr bevorzugt kleiner als 400 g/mol, am meisten bevorzugt 300 g/mol;
- eines Epoxids, vorzugsweise ein primäres, sekundäres oder tertiäres Epoxid, noch mehr bevorzugt ein primäres oder sekundäres Epoxid;
- eines Katalysators;
- eines Amins, vorzugsweise ein primäres Amin, noch mehr bevorzugt ein aliphatisches primäres Amin; oder
- eine Kombination davon

in einem erfindungsgemässen Verfahren.

Vorzugsweise ist der verwendete Katalysator dabei ein Elektrophil, vorzugsweise ein Wasserstoffbrückenbindungs-Katalysator, noch mehr bevorzugt ein Katalysator ausgewählt aus der Gruppe bestehend aus Thioharnstoff und Salzen von Thioharnstoff. In einer anderen bevorzugten Ausführungsform ist der Katalysator eine basische Stickstoffverbindung, bevorzugt ein sterisch gehindertes Amin, weiter bevorzugt ein tertiäres Amin, wobei das tertiäre Amin vorzugsweise ausgewählt aus der Gruppe bestehend aus

- 1,5,7-Triazabicyclo[4.4.0]dec-5-en;
- 7-Methyl-1,5,7-triazabicyclo[4.4.0]dec-5-ene;
- 1,8-Diazabicyclo[5.4.0]undec-7-en;
- 1,5-Diazabicyclo[4.3.0]non-5-ene;
- Triethylamin; und
- ein Polyaminophosphazen, wobei das Polyaminophosphazen vorzugsweise $P_4$-$t$-Bu ist.

In einer weiteren bevorzugten Ausführungsform ist der Katalysator ein stark basischer, aber schwach nukleophiler Katalysator.

Die Erfindung wird anhand der folgenden Beispiele näher erläutert. Die Beispiele sollen den Umfang der Erfindung in keiner Weise einschränken.

Beispiele 1 bis 3 umfassen unterschiedliche Herstellungsverfahren für H-NIPUs.

Beispiel 1 (B1): 16 g ITAPOX 70/30 (erhältlich bei ddchem S.r.l, Mazzantica VR, Italien) und 9.8 g SP-1P-0-004_500 (erhältlich bei Specific Polymers, Castries, Frankreich) werden in einen 50 ml Becher gegeben und mit einem Speedmixer bei 2000 U/min während 1 Minute gemischt. Anschliessend werden 0.3 g 1,5,7-Tri-azabicyclo[4.4.0]dec-5-en (erhältlich bei Sigma-Aldrich, St. Louis MO, USA) und bei 2500 U/min für weitere 3 Minuten gerührt. Der Becher wird für 20 Minuten in einen auf 80 °C eingestellten Ofen gestellt. Nach diesen 20 Minuten ist der Katalysator komplett aufgelöst. Die Mischung wird wieder herausgenommen, auf Raumtemperatur abgekühlt, und nochmals für 3 Minuten bei 2500 U/min gerührt. Es werden 3.9 g Diethylentriamin (erhältlich bei Huntsman, Salt Lake City UT, USA) bei 2000 U/min während 1 Minute eingerührt und die Masse unmittelbar danach vergossen oder für die Verklebung eingesetzt.

Beispiel 2 (B2): 9 g DER 331 (erhältlich bei Olin, Clayton MO, USA) und 14.8g SP-3-00-003 (erhältlich bei Specific Polymers, Castries, Frankreich) werden in einen 50 ml Becher gegeben und mit einem Speedmixer bei 2000 U/min während 1 Minute gemischt. Anschliessend werden 0.3 g 1,5,7-Triazabicyclo[4.4.0]dec-5-en (erhältlich bei Sigma-Aldrich, St. Louis MO, USA) und bei 2500 U/min für weitere 3 Minuten gerührt. Der Becher wird für 20 Minuten in einen auf 80 °C eingestellten Ofen gestellt. Nach diesen 20 Minuten ist der Katalysator komplett aufgelöst. Die Mischung wird wieder herausgenommen, auf Raumtemperatur abgekühlt, und nochmals für 3 Minuten bei 2500 U/min gerührt. Es werden 6.2 g Diethylentriamin (erhältlich bei Huntsman, Salt Lake City UT, USA) mit 2000 U/min während 1 Minute eingerührt und die Masse unmittelbar danach vergossen oder für die Verklebung eingesetzt.

Beispiel 3 (B3): 8 g DER 331 (erhältlich bei Olin, Clayton MO, USA), 8g NC-514S (erhältlich bei Cardolite Cooperation, Bristol PA, USA), 0.3 g DER 741 (erhältlich bei Olin, Clayton MO, USA), 3.6 g SP-1P-0-004_500 (erhältlich bei Specific Polymers, Castries, Frankreich)und 3g SP-3-00-003 (erhältlich bei Specific Polymers, Castries, Frankreich) werden in einen 50 ml Becher gegeben und mit einem Speedmixer bei 2000 U/min während 1 Minute gemischt. Anschliessend werden 0.3 g 1,5,7-Tria-zabicyclo[4.4.0]dec-5-en (erhältlich bei Sigma-Aldrich, St. Louis MO, USA) und bei 2500 U/min für weitere 3 Minuten gerührt. Der Becher wird für 20 Minuten in einen auf 80 °C eingestellten Ofen gestellt. Nach diesen 20 Minuten ist der Katalysator komplett aufgelöst. Die Mischung wird wieder herausgenommen, auf Raumtemperatur abgekühlt, und nochmals für 3 Minuten bei 2500 U/min gerührt. Es werden 1.9 g Diethylentriamin (erhältlich bei Huntsman, Salt Lake City UT, USA) und 4.9 g GX-6004 (erhältlich bei Cardolite Cooperation, Bristol PA, USA) mit 2000 U/min während 1 Minute eingerührt und die Masse unmittelbar danach vergossen oder für die Verklebung eingesetzt.

Charakterisierung der H-NIPUs aus Beispielen 1 bis 3

Die H-NIPUs aus Beispielen 1 bis 3 werden anhand ihrer initialen Viskosität, Topfzeit, Zugfestigkeit, Bruchdehnung, Zugscherfestigkeit, Speichermodul und Glasübergangstemperatur charakterisiert.

Zur Herstellung der Prüfkörper für die Zug-Dehnungsprüfung werden die in den Beispielen 1 bis 3 (B1 bis B3) hergestellten Massen in Gussformen in Platten gegossen und nach erfolgter Aushärtung mittels eines Stanzwerkzeuges die Prüfkörper ausgestanzt. Aus diesen Platten werden ebenfalls die Prüfkörper für die Dynamisch-Mechanische Analyse (DMA) geschnitten.

Zur Herstellung der Zug-Scherprüfkörper aus Holz werden die Massen auf eine gehobelte Buchenholzplatte aufgerakelt und mit einer Überlappung von 25 mm x 12 mm und einer Kraft von 0.8 N/mm2 während 24 Stunden zusammengepresst. Die Verklebung erfolgt bei 20 °C und 65 % relativer Feuchte.

Zur Herstellung der Zug-Scherprüfkörper aus Aluminium werden die Massen auf eine AlMg$_3$-Platte aufgerakelt und mit einer Überlappung von 25 mm x 12 mm und einem Druck von 0.2 N/mm$^2$ während 24 Stunden zusammengepresst. Die Verklebung erfolgt bei 20 °C und 65 % relativer Feuchte.

Alle Gemische werden nach der Herstellung während 7 Tagen bei 20 °C und 65 % relativer Feuchte gelagert, bevor die Charakterisierung erfolgt.

Die Resultate der Charakterisierung sind in Tabelle 1 zusammengefasst.

Tabelle 1: Charakterisierung der H-NIPUs aus Beispielen 1 bis 3 (B1 bis B3); [1]gehobeltes Holz, [2]AlMg$_3$ blank.

|  | B1 | B2 | B3 |
|---|---|---|---|
| Initiale Viskosität bei 20 °C / Pa*s | 5.5 | 324.0 | 6.7 |
| Topfzeit bei 20 °C / min | 5 | 6 | 13 |
| Zugfestigkeit / MPa | 36.4 | 46.6 | 11.5 |
| Bruchdehnung / % | 6.2 | 9.0 | 108.9 |
| Zugscherfestigkeit / MPa | 6.0[1] | 9.8[2] | 6.9[1]; 11.9[2] |
| Speichermodul bei 20 °C / MPa | 1192 | 1180 | 269 |
| Glasübergangstemperatur $T_g$ / °C | 51.6 | 49.6 | 35.7 |

Post-Curing-Potential aus B1

Das Post-Curing-Potential des ausgehärteten H-NIPU aus B1 wurde ermittelt, indem das H-NIPU von 50 °C auf 180 °C erhitzt wurde mit einer Aufheizrate von 10 °C/min. Es konnte eine Erhöhung der Glasübergangstemperatur, $T_g$, von 10 °C und somit ein Post-Curing-Potential festgestellt werden.

Beispiel 4 (B4): Auswirkungen des Molekulargewichts des wenigstens einen cyclischen Carbonats auf die Aushärtung von NIPUs

Vier unterschiedliche cyclische Carbonate (CC) wurden mittels erfindungsgemässem Verfahren zu einem NIPU umgesetzt (B4.1 bis B4.4). Die vier Gemische wurden bei Raumtemperatur ausgehärtet. Als Vergleich wurde eine separate Probe jedes Gemischs auch bei erhöhten Temperaturen in einem Ofen ausgehärtet. Die Resultate zu Qualität der Aushärtung und Glasübergangstemperatur, $T_g$, sind in Tabelle 2 zusammengefasst.

Tabelle 2: Auswirkungen des Molekulargewichts des cyclischen Carbonats (CC) auf die Aushärtung des NIPU.

|  | $M_w$(CC) [g/mol] | Aushärtung in einem Ofen | | Aushärtung bei Raumtemperatur |
|---|---|---|---|---|
|  |  | Qualität | $T_g$ [°C] | Qualität |
| B4.1 | 440 | unvollständig ausgehärtet; steif; nicht klebrig | < 9 | unvollständig ausgehärtet; leicht elastisch; nicht klebrig |
| B4.2 | 480 | unvollständig ausgehärtet; leicht elastisch; nicht klebrig | < -3 | unvollständig ausgehärtet; leicht elastisch; nicht klebrig |
| B4.3 | 610 | N/A | N/A | nicht ausgehärtet |
| B4.4 | 770 | nicht ausgehärtet; leicht elastisch; klebrig | < -35 | nicht ausgehärtet |

In Beispielen B4.1 und B4.2 wurde das NIPU mit einem cyclischen Carbonat mit vergleichsweise niedrigem Molekulargewicht ($M_w$) hergestellt (B4.1: 440 g/mol; B4.2: 480 g/mol). Der Grad der Aushärtung liegt im erwarteten Bereich, bei einer unvollständigen Aushärtung, sowohl beim Aushärten bei Raumtemperatur als auch beim Aushärten in einem Ofen. Als Vergleich härten die Mischungen in Beispielen B4.3 und B4.4 gar nicht aus. In beiden Beispielen wurden cyclische Carbonate eingesetzt mit vergleichsweise hohem Molekulargewicht (B4.3: 610 g/mol; B4.4: 770 g/mol). Da in Beispielen B4.1 bis B4.4 keine Epoxide eingesetzt wurden, handelt es sich bei den entstandenen Polymeren um NIPUs und nicht um H-NIPUs. Es gibt jedoch keinen Hinweis darauf, warum die gleichen Schlussfolgerungen nicht für H-NIPUs angenommen werden können.

**Patentansprüche**

1. Verfahren zur Herstellung eines hybriden nicht-isocyanathaltigen Polyurethans, **dadurch gekennzeichnet, dass** die folgenden Schritte umfasst sind:

i. Herstellen eines Gemisches umfassend wenigstens ein Epoxid, wenigstens ein cyclisches Carbonat und wenigstens einen Katalysator für die Katalyse der C-N Bindungsbildung unter Beteiligung des wenigstens einen cyclischen Carbonats, wobei das wenigstens eine Epoxid und das wenigstens eine cyclische Carbonat vorzugsweise multifunktionell sind;

ii. optional: Erhitzen des Gemisches, um den Katalysator in Lösung zu bringen; und

iii. Hinzugeben wenigstens eines Amins, um ein hybrides nicht-isocyanathaltiges Polyurethan durch Reaktion des Gemisches bei Raumtemperatur zu erhalten, wobei das wenigstens eine Amin vorzugsweise multifunktionell ist.

2. Verfahren nach Anspruch 1, wobei Schritt i. bei Raumtemperatur durchgeführt wird.

3. Verfahren nach einem der vorangehenden Ansprüche, wobei nach Hinzugeben des mindestens einen Amins und vor Erhalt des hybriden nicht-isocyanathaltigen Polyurethans das Gemisch vergossen oder auf ein Trägermaterial aufgetragen wird.

4. Verfahren nach einem der vorangehenden Ansprüche, wobei

- wenigstens ein Füllstoff ausgewählt aus der Gruppe der mineralischen, organischen und hybriden Füllstoffe;
- wenigstens ein Farbstoff;
- wenigstens ein Additiv ausgewählt aus der Gruppe der Stabilisatoren, Verarbeitungshilfsmittel, Verdicker, Emulgatoren, Schlagzähmodifikatoren und Flammschutzmittel; oder
- eine Kombination davon

hinzugegeben wird.

5. Verfahren nach einem der vorangehenden Ansprüche, wobei wenigstens ein primäres Amin hinzugegeben wird, vorzugsweise wenigstens ein aliphatisches primäres Amin, am meisten bevorzugt ein aliphatisches primäres Amin ausgewählt aus der Gruppe bestehend aus Diethylentriamin, wenigstens ein Amin der Gruppe der Phenalkamine, oder eine Kombination davon.

6. Verfahren nach Anspruch 5, wobei die Summe der Anzahl an funktionellen Gruppen des wenigstens einen cyclischen Carbonats und der Anzahl an funktionellen Gruppen des wenigstens einen Epoxids in einem Verhältnis von zwischen 0.1:1 und 6:1, bevorzugt zwischen 0.2:1 und 3:1, am meisten bevorzugt zwischen 0.4:1 und 1.5:1 zur Anzahl an funktionellen Gruppen des wenigstens einen primären Amins vorliegt.

7. Verfahren nach einem der vorangehenden Ansprüche, wobei wenigstens ein Epoxid ausgewählt aus der Gruppe bestehend aus primären, sekundären, und tertiären Epoxiden oder eine Kombination davon hinzugegeben wird, vorzugsweise wenigstens ein primäres und/oder ein sekundäres Epoxid, am meisten bevorzugt wenigstens ein Epoxid ausgewählt aus der Gruppe bestehend aus Epichlorohydrin, di-funktionelles Glycidyl-Ether-Epoxidharz und Trimethylol-Propan-Triglycidyl-Ether.

8. Verfahren nach einem der vorangehenden Ansprüche, wobei der Katalysator

- ein Elektrophil ist, vorzugsweise ein Wasserstoffbrückenbindungs-Katalysator, noch mehr bevorzugt ein Katalysator ausgewählt aus der Gruppe bestehend aus

  i. Thioharnstoff; und
  ii. Salzen von Thioharnstoff; oder

- eine basische Stickstoffverbindung ist, bevorzugt ein sterisch gehindertes Amin, weiter bevorzugt ein tertiäres Amin, wobei das tertiäre Amin vorzugsweise ausgewählt ist aus der Gruppe bestehend aus

  i. 1,5,7-Triazabicyclo[4.4.0]dec-5-en;
  ii. 7-Methyl-1,5,7-triazabicyclo[4.4.0]dec-5-ene;
  iii. 1,8-Diazabicyclo[5.4.0]undec-7-en;
  iv. 1,5-Diazabicyclo[4.3.0]non-5-ene;
  v. Triethylamin; und
  vi. ein Polyaminophosphazen, wobei das Polyaminophosphazen vorzugsweise $P_4$-$t$-Bu ist; oder

- ein stark basischer, aber schwach nukleophiler Katalysator ist;

wobei der Katalysator bevorzugt ein sterisch gehindertes Amin ist.

9. Kit-of-Parts zur Herstellung eines hybriden nicht-isocyanathaltigen Polyurethans nach dem Verfahren nach einem der Ansprüche 1 bis 8, umfassend

   - eine erste Komponente umfassend wenigstens ein Epoxid; und
   - eine zweite Komponente umfassend wenigstens ein Amin;

   wobei

   - die erste Komponente und/oder eine dritte Komponente wenigstens ein cyclisches Carbonat; und
   - mindestens eine Komponente wenigstens einen Katalysator für die Katalyse der C-N Bindungsbildung unter Beteiligung des wenigstens einen cyclischen Carbonats umfasst.

10. Hybrides nicht-isocyanathaltiges Polyurethan, insbesondere in der Form eines Schaums, eines Bindemittels, eines Klebstoffs oder einer Beschichtung, wobei die Beschichtung vorzugsweise ein Lack, ein Farbmittel oder ein Verputz ist, erhältlich durch ein Verfahren nach einem der Ansprüche 1 bis 8.

11. Hybrides nicht-isocyanathaltiges Polyurethan gemäss Anspruch 10, wobei

   - das wenigstens eine Epoxid; oder
   - das wenigstens eine cyclische Carbonat; oder
   - das wenigstens eine Amin; oder
   - eine Kombination davon

   (eine) bio-basierte Verbindung(en) ist/sind.

12. Hybrides nicht-isocyanathaltiges Polyurethan gemäss einem der Ansprüche 10 bis 11, wobei das gehärtete Polyurethan eine Zugfestigkeit von mindestens 10 MPa, vorzugsweise mindestens 25 MPa, am meisten bevorzugt mindestens 40 MPa; eine Bruchdehnung von mindestens 5 %, vorzugsweise mindestens 50 %, am meisten bevorzugt mindestens 100 %; eine Zugscherfestigkeit von mindestens 5 MPa, vorzugsweise mindestens 8 MPa, am meisten bevorzugt mindestens 11 MPa; ein Speichermodul bei 20 °C von mindestens 200 MPa, vorzugsweise mindestens 600 MPa, am meisten bevorzugt mindestens 1000 MPa; oder eine Glasübergangstemperatur, $T_g$, von mindestens 30 °C, vorzugsweise mindestens 40 °C, am meisten bevorzugt mindestens 50 °C aufweist; oder eine Kombination dieser Eigenschaften.

13. Verwendung eines Kit-of-Parts gemäss Anspruch 9 zur Herstellung eines Schaums, eines Bindemittels, eines Klebstoffs oder einer Beschichtung, wobei die Beschichtung vorzugsweise ein Lack, ein Farbmittel oder ein Verputz ist.

14. Verwendung eines Kit-of-Parts gemäss Anspruch 9; oder eines hybriden nicht-isocyanathaltigen Polyurethans gemäss einem der Ansprüche 10 bis 12 für strukturelle Anwendungen im Automobilbau, im Schiffsbau, im Eisenbahnbau, im Flugzeugbau, im Bau von Transportmitteln, in der Elektronik, im Metallbau, im Maschinenbau, im 3D-Druck, im Holzbau, im Bau von Fassaden, im Dächerbau, im Bodenbau, im Möbelbau, im Messebau, im Bühnenbau, im Türenbau, im Bau von Trennwänden, als Gummi-Ersatz, in der Logistik, im Containerbau, im Tankbau, in der Energiegewinnung, in der Herstellung von Batterien, Farben, Displays, Schuhen, Sportartikeln, Verpackungen, insbesondere Lebensmittelverpackungen, Lacken, Putzen, Klebstoffen oder Matrizen für Composites.

15. Verwendung

   - eines cyclischen Carbonats, vorzugsweise ein cyclisches Carbonat mit einem Molekulargewicht kleiner als 600 g/mol, noch mehr bevorzugt kleiner als 400 g/mol, am meisten bevorzugt 300 g/mol;
   - eines Epoxids, vorzugsweise ein primäres, sekundäres oder tertiäres Epoxid, noch mehr bevorzugt ein primäres oder sekundäres Epoxid;
   - eines Katalysators, wobei der Katalysator vorzugsweise

      i. ein Elektrophil ist, vorzugsweise ein Wasserstoffbrückenbindungs-Katalysator, noch mehr bevorzugt ein Katalysator ausgewählt aus der Gruppe bestehend aus

- Thioharnstoff; und
- Salzen von Thioharnstoff; oder

ii. eine basische Stickstoffverbindung ist, bevorzugt ein sterisch gehindertes Amin, weiter bevorzugt ein tertiäres Amin, wobei das tertiäre Amin vorzugsweise ausgewählt ist aus der Gruppe bestehend aus

- 1,5,7-Triazabicyclo[4.4.0]dec-5-en;
- 7-Methyl-1,5,7-triazabicyclo[4.4.0]dec-5-ene;
- 1,8-Diazabicyclo[5.4.0]undec-7-en;
- 1,5-Diazabicyclo[4.3.0]non-5-ene;
- Triethylamin; und
- ein Polyaminophosphazen, wobei das Polyaminophosphazen vorzugsweise $P_4$-t-Bu ist; oder

iii. ein stark basischer, aber schwach nukleophiler Katalysator ist;

wobei der Katalysator bevorzugt ein sterisch gehindertes Amin ist;
- eines Amins, vorzugsweise ein primäres Amin, noch mehr bevorzugt ein aliphatisches primäres Amin; oder
- eine Kombination davon

in einem Verfahren gemäss einem der Ansprüche 1 bis 8.

EUROPÄISCHER RECHERCHENBERICHT

Nummer der Anmeldung

EP 23 15 5855

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | LAMBETH ROBERT H ET AL: "Mechanical and adhesive properties of hybrid epoxy-polyhydroxyurethane network polymers", POLYMER, ELSEVIER, AMSTERDAM, NL, Bd. 183, 9. Oktober 2019 (2019-10-09), XP085910199, ISSN: 0032-3861, DOI: 10.1016/J.POLYMER.2019.121881 [gefunden am 2019-10-09] * das ganze Dokument * ----- | 1-15 | INV. C09D175/04 C09J175/04 C08G71/04 |
| A,D | US 2012/208967 A1 (BIRUKOV OLGA [IL] ET AL) 16. August 2012 (2012-08-16) * Absatz [0001] * * Absätze [0036], [0037]; Beispiel 1 * ----- | 1-15 | |
| A | EP 4 130 091 A1 (DAINICHISEIKA COLOR CHEM [JP]) 8. Februar 2023 (2023-02-08) * Absätze [0001], [0006] – [0014] * * Absätze [0072] – [0073]; Beispiel 3; Tabellen 2-1 * ----- | 1-15 | RECHERCHIERTE SACHGEBIETE (IPC) C09D C09J C08G |

Der vorliegende Recherchenbericht wurde für alle Patentansprüche erstellt

| Recherchenort | Abschlußdatum der Recherche | Prüfer |
|---|---|---|
| München | 26. Juni 2023 | Neugebauer, Ute |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 5855

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2023

| Im Recherchenbericht angeführtes Patentdokument | Datum der Veröffentlichung | Mitglied(er) der Patentfamilie | Datum der Veröffentlichung |
|---|---|---|---|
| US 2012208967 A1 | 16-08-2012 | CA 2767784 A1 | 15-08-2012 |
| | | US 2012208967 A1 | 16-08-2012 |
| EP 4130091 A1 | 08-02-2023 | CN 115349001 A | 15-11-2022 |
| | | EP 4130091 A1 | 08-02-2023 |
| | | JP 6899941 B1 | 07-07-2021 |
| | | JP 2021161181 A | 11-10-2021 |
| | | KR 20220146716 A | 01-11-2022 |
| | | TW 202144529 A | 01-12-2021 |
| | | WO 2021200812 A1 | 07-10-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9102829 B2
- US 7989553 B2

- US 2021032495 A1, ZHOU, Q.


**In der Beschreibung aufgeführte Nicht-Patentliteratur**

- **STACHAK, P. et al.** *Recent Advances in Fabrication of NIPU-based Composite Materials. Materials,* 2021, vol. 14, 3497
- **CORNILLE, A. et al.** A perspective approach to sustainable routes for non-isocyanate polyurethanes. *Eur. Polym. J.,* 2017, vol. 87, 535-552

- **KE, J. et al.** Critical transition of epoxy resin from brittleness to toughness by incorporating CO2-sourced cyclic carbonate. *J. CO2 Util.,* 2018, vol. 26, 302-313
- **LAMBETH, R. H. et al.** Mechanical and adhesive properties of hybrid epoxy-PHU network polymers. *Polymer,* 2019, vol. 183, 121881